**Europäisches Patentamt**

**European Patent Office**

**Office européen des brevets**

(11) Numéro de publication: **0 060 797**
**A1**

## DEMANDE DE BREVET EUROPEEN

(21) Numéro de dépôt: **82420028.1**

(22) Date de dépôt: **01.03.82**

(51) Int. Cl.³: **B 62 M 9/12**

(30) Priorité: **17.03.81  FR 8105786**

(43) Date de publication de la demande: **22.09.82**
**Bulletin 82/38**

(84) Etats contractants désignés: **AT BE CH DE GB IT LI LU NL SE**

(71) Demandeur: **Etablissements LE SIMPLEX (société à responsabilité limitée), 3 et 5 rue de la Breuchillière Zône Industrielle Dijon St-Apollinaire, F-21019 Dijon Cedex (FR)**

(72) Inventeur: **Bonnard, Pierre, 7 rue de la République, F-78650 Beynes (FR)**

(74) Mandataire: **Buttet, Roger et al, "Cabinet Charras" 3, Place de l'Hôtel-de-Ville, F-42000 Saint-Etienne (FR)**

(54) **Changement de vitesse au pédalier des cycles et véhicules similaires.**

㊗57  Un troisième flasque (11) est monté mobile entre le flasque intérieur (9a) et le flasque extérieur (9b) d'une fourchette (9) de guidage de la chaîne (A) à grand écartement, afin d'agir en relation avec le moyen de commande, lors des actions de changement de vitesse avant à parallélogramme.

<u>Changement de vitesse au pédalier des cycles et véhicules</u>
<u>similaires.</u>

L'invention concerne les accessoires pour cycles et véhicules similaires.

On connait des changements de vitesse au pédalier correspondant au préambule de la revendication 1, comportant une fourchette à deux flasques ou branches, entre lesquels passe la chaîne, et un mécanisme à parallèlogramme articulé ou autre, de déplacement transversal de ladite fourchette, de façon à amener la chaîne sur le plateau denté de pédalier choisi pour l'entraînement. Le mécanisme est actionné par le cycliste en utilisant tout système à manette et câble ou à levier ou autrement.

Dans de tels changements de vitesse, le cycliste éprouve souvent des difficultés à placer exactement le levier ou la manette de commande, dans la position angulaire correspondant à un déplacement transversal correct de la chaîne, afin d'amener cette dernière dans la position précise d'enroulement sur le plateau denté choisi. Si la chaîne n'est pas correctement placée, il en résulte des bruits, des détériorations, des sauts de chaîne qu'il faut remettre en place.

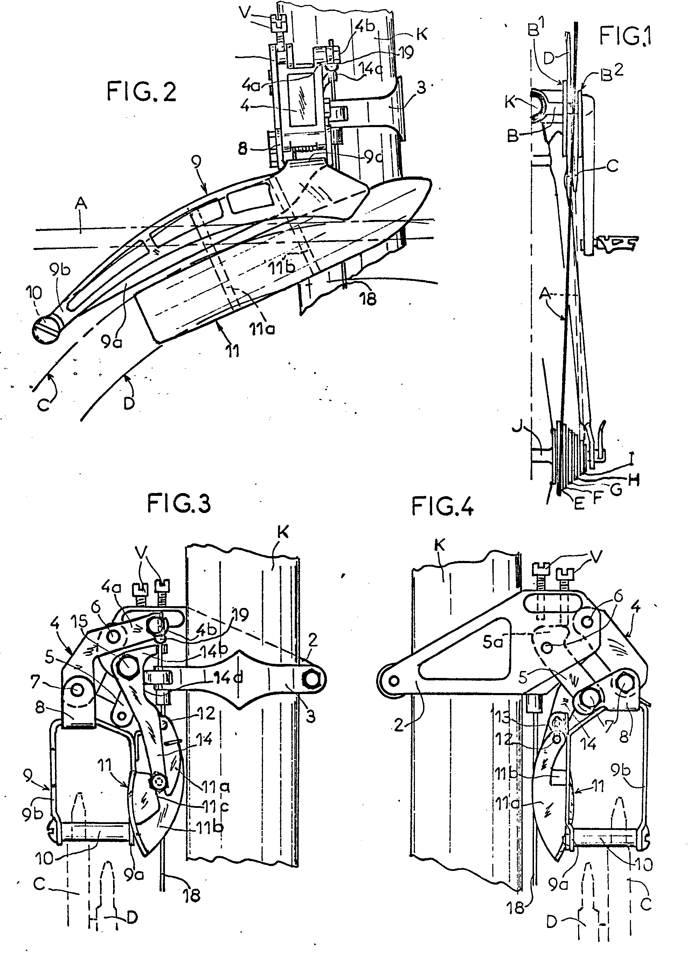

Un autre inconvénient réside dans le fait que, comme on le voit à la figure 1 des dessins, la chaîne A passe entre les flasques B1 - B2 de la fourchette désignée dans l'ensemble par B, de façon à déplacer transversalement ladite chaîne et à l'enrouler sur l'un des plateaux dentés C - D du pédalier de la bicyclette, afin de modifier les rapports de vitesse et effets d'entraînement, cela en conjugaison avec l'enroulement de la chaîne sur l'un des pignons E - F - G - H - I ..., de la roue libre calée sur le moyeu J de la roue arrière de la bicyclette. Compte tenu du nombre des pignons de la roue libre, et aussi du fait que le pédalier est équipé d'au moins deux plateaux dentés, la chaîne A est amenée à prendre des positions obliques présentant une inclinaison très sensible par rapport aux plans des plateaux dentés. Il en résulte des frictions de la chaîne contre l'un ou l'autre des flasques B1 - B2, ce qui entraîne une usure et des détériorations plus ou moins rapides des flasques et surtout de la chaîne, des frottements et des bruits désagréables, des chocs multiples et répétés des extrémités des axes de la chaîne contre les flasques.

La présente invention a pour but de remédier à ces inconvénients.

L'invention telle qu'elle est caractérisée dans les revendications, résout le problème consistant à créer un changement de vitesse au pédalier des cycles et véhicules similaires, dont l'écartement entre les flasques des fourchettes est très sensiblement plus grand que l'écartement usuel, et tel que, en dehors des actions de changement de vitesse, la chaîne n'est pas en contact avec l'un ou l'autre flasque, dans les positions les plus inclinées d'enroulement de ladite chaîne sur les pignons et plateaux extrêmes ; un troisième flasque ou organe équivalent de poussée sur la chaîne, étant monté mobile par pivotement ou autrement, au-dessous et par rapport au flasque intérieur de la fourchette (flasque le plus près du cadre), avec un système élastique de rappel et une butée, afin de maintenir au repos, ledit flasque mobile dans une position écartée du flasque extérieur, sensiblement dans le plan du flasque intérieur ; un moyen à levier coudé, pivotant, ou équivalent, étant articulé sur un axe du support fixe ou autre partie fixe et relié d'une manière libre et articulé au flasque mobile, ledit levier coudé étant pivoté lorsque, à partir d'une position neutre déterminée, on déplace angulairement dans un sens jusqu'à une position limite, la manette ou levier de commande du changement de vitesse, le flasque mobile étant rapproché du flasque extérieur en poussant la chaîne sur le plateau de plus grand diamètre ; le déplacement angulaire en sens inverse du levier de commande, à partir de la position neutre et jusqu'à une position limite, actionnant les moyens pivotants du système à parallèlogramme articulé, en déplaçant ensemble les flasques de la fourchette, le flasque estérieur tirant la chaîne sur le plateau de plus petit diamètre, pendant que, simultanément, le flasque mobile est rapproché du flasque extérieur par les effets conjugués de ses liaisons au flasque intérieur et au levïer coudé, ledit flasque mobile étant ramené dans tous les cas, aussitôt après les déplacements transversaux de la chaîne, dans le plan ou sensiblement, du flasque intérieur.

Ces caractéristiques et d'autres encore ressortiront de la suite de la description.

Pour fixer l'objet de l'invention, sans toutefois le limiter, aux figures des dessins annexés :

La figure 1 est une vue en plan à caractère schématique, montrant l'inclinaison de la chaîne par rapport au plan des plateaux dentés et des pignons, lorsqu'elle est enroulée sur les pignons extrêmes de la roue libre et sur l'un ou l'autre des plateaux dentés du pédalier. On a illustré deux positions inclinées extrêmes de la chaîne, l'une en traits continus, l'autre en traits interrompus.

La figure 2 est une vue de côté illustrant une forme de réalisation du changement de vitesse au pédalier selon l'invention, monté sur le tube selle-pédalier d'une bicyclette. On a illustré en traits interrompus, la chaîne et les plateaux dentés du pédalier.

Les figures 3 et 4 sont respectivement une vue de face avant et une vue arrière, du changement de vitesse selon la figure 1.

La figure 5 est une vue en plan du changement de vitesse selon la figure 2. Les tracés en traits interrompus illustrant les inclinaisons de la chaîne enroulée sur des pignons extrêmes et l'absence de contact avec les flasques.

La figure 6 est une vue de côté, à caractère schématique, illustrant le changement de vitesse selon l'invention, monté sur le tube selle-pédalier et son levier de commande, monté sur le tube de cadre. Le levier de commande est illustré en traits continus dans la position neutre qui est bien déterminée. On a illustré en traits interrompus, les déplacements limites des déplacements angulaires, dans les deux sens, pour chaque commande.

Les figures 7 et 8 sont des vues de face avant, illustrant le changement de vitesse respectivement en position de passage de la chaîne du petit plateau vers le grand plateau, et du grand plateau vers le petit plateau.

Les figures 9 et 10 sont des vues par l'arrière, illustrant le changement de vitesse respectivement en position de passage de la chaîne du petit plateau vers le grand plateau, et du grand plateau vers le petit plateau.

La figure 11 est une vue en perspective illustrant séparément les éléments du changement de vitesse nécessaires pour mettre en oeuvre l'invention.

Selon la présente invention et dans l'exemple nullement limitatif illustré aux dessins, ce changement de vitesse comporte essentiellement un support 2 fixé par demi-colliers 3 au tube K du cycle, et présentant de manière connue des biellettes 4, 5 articulées en 6 au support 2 et en 7 à une chape 8 destinée à porter la fourchette de guidage 9 de la chaîne. Des vis V traversant le support 2, peuvent être réglées pour l'appui de l'extrémité profilée 5a de la biellette 5, afin d'obtenir un débattement de la fourchette variable selon le nombre de plateaux.

La fourchette 9 est essentiellement constituée par un flasque intérieur 9a et un flasque extérieur 9b, reliés près d'une extrémité, par une traverse 9c solidarisée par tous moyens connus, à la chape 8, et à l'autre extrémité, par une entretoise 10, comme illustré plus particulièrement à la figure 11.

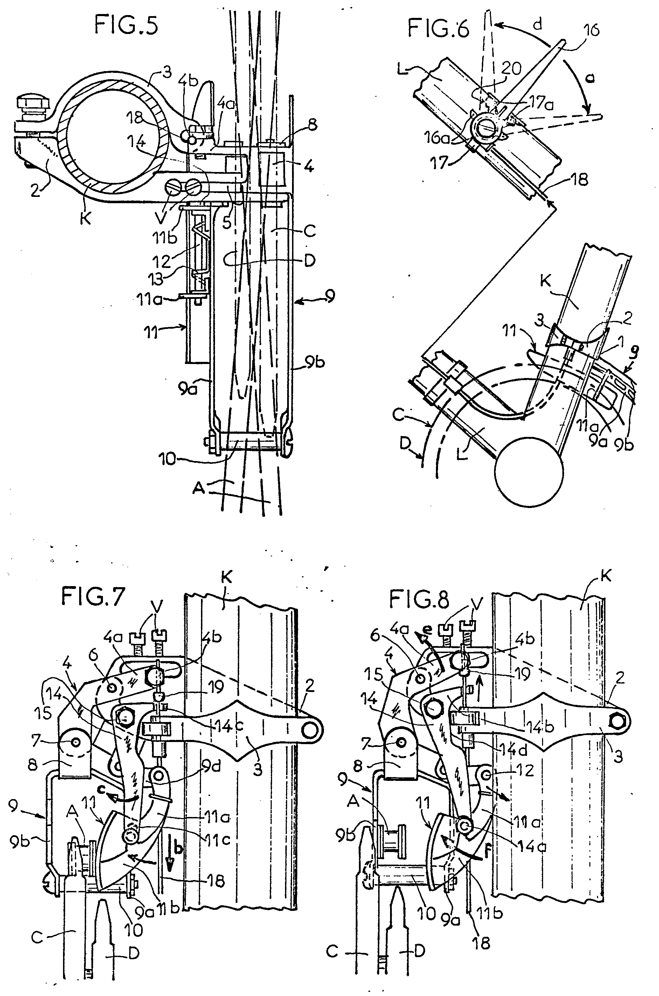

L'écartement entre les flasques intérieur et extérieur est très sensiblement supérieur à l'écartement usuel, de telle sorte, qu'au repos, c'est-à-dire en dehors des actions de changement de vitesse, la chaîne A n'est jamais en contact avec l'un ou l'autre flasque, même lorsqu'elle présente une inclinaison maximum, comme illustré figures 1 et 5, en étant par exemple, enroulée sur le grand plateau C et sur le plus grand pignon E, ou inversement, sur le petit plateau D et sur le plus petit pignon I, cela même avec des roues libres à plus de cinq vitesses.

Cette disposition très écartée des flasques ne permet pas le bon guidage de la chaîne lorsque l'on veut la placer sur l'un ou l'autre des plateaux du pédalier, c'est pourquoi, selon l'invention, on a prévu de réduire l'écartement des flasques, seulement pendant les actions de changement de vitesse.

Pour cela, un troisième flasque 11 ou organe équivalent, de poussée sur la chaîne, est monté mobile par rapport au flasque intérieur 9a. Selon l'exemple non limitatif illustré, le flasque 11 présente une surface de contact convexe en section avec la chaîne et s'étend au repos, sensiblement en dessous et dans le plan du flasque intérieur 9a, avec une extrémité arrière proche de l'entretoise 10 et une extrémité avant débordant par rapport aux extrémités avant des flasques 9a, 9b (figure 2).

En deux points médians et espacés de la longueur, le flasque 11 porte deux bras coudés (11a, 11b), qui sont articulés sur un axe 12 porté par deux paliers ou oeillets 9d équipant le flasque intérieur 9a (figure 11).

Comme on le voit bien aux figures 3, 4, 5, un ressort en épingle 13 est enroulé sur l'axe 12 et s'appuie à une extrémité sur le bras 11b, et à l'autre extrémité, sur le flasque 9a, afin de rappeler constamment le flasque 11 en position écartée du flasque extérieur.

Le bras 11b présente dans sa partie arrière, une ouverture ou fente 11c destinée à l'engagement d'un doigt 14a porté par l'extrémité d'un levier coudé 14, articulé en 15 au support 2 et dont l'autre partie 14b présente une entaille 14c dans laquelle peut coulisser l'organe de liaison entre le changement de vitesse et son moyen de commande (figures 3, 6 et 11).

Le moyen de commande illustré schématiquement à la figure 6 est du type à manette ou levier 16 axé sur un collier 17 de fixation au tube de cadre L et agencé de telle sorte qu'il ait au repos une position neutre ou point mort (trait continu figure 6) perceptible, marqué ou repéré aisément par l'utilisateur.

La manette agit, à partir du point neutre, en liaison avec tout moyen élastique 20 mis en tension dans un sens ou dans l'autre, jusqu'à une position limite dans chaque sens, constituée par exemple par des bossages 16a de la manette, mis en appui contre des saillies 17a formées sur un organe fixe.

L'organe de liaison entre le levier 16 et le changement de vitesse est de préférence une tige semi-rigide 18, c'est-à-dire, un fil métallique inextensible, qui peut suivre par de larges courbes, le profil du cadre entre la boîte de pédalier et le haut du tube diagonal ou autre élément de la bicyclette sur lequel est fixé le levier.

La liaison entre la tige 18 et le changement de vitesse s'effectue par l'intermédiaire d'une butée qui peut être une saillie 19 solidaire de la tige 18. La tige 18 arrivant du levier de commande 16, passe dans l'entaille 14c du levier 14, puis dans un trou ou orifice 4b de guidage à coulissement, réalisé dans l'extrémité d'un prolongement 4a de la biellette 4. La butée 19 est placée entre l'entaille 14c et l'orifice 4b, et la tige 18 est ainsi maintenue à coulissement libre, par l'orifice 4b et l'entaille 14c.

En se référant plus particulièrement aux figures 6 à 10 des dessins, on décrit maintenant le fonctionnement du changement de vitesse selon l'invention.

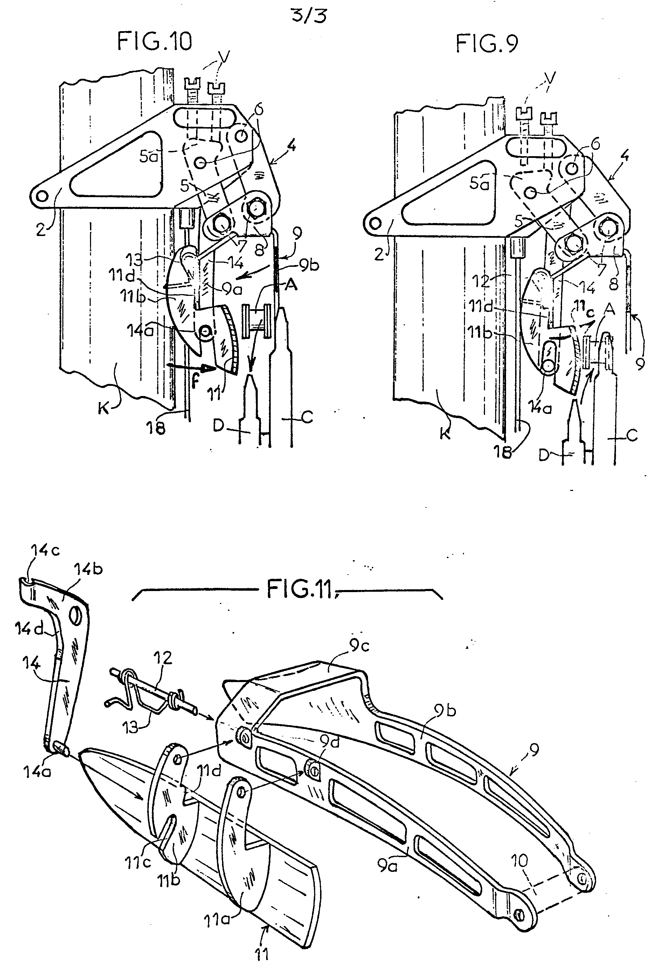

Le levier de commande 16 étant placé en position neutre (traits continus, figure 6), la fourchette 9 du changement de vitesse est placée comme illustré figure 3 notamment, avec le flasque mobile 11, sensiblement dans l'alignement du flasque intérieur 9a. On considère par exemple, que la chaîne A est enroulée sur le petit plateau D du pédalier. Lorsque l'on veut placer la chaîne sur le grand plateau C du pédalier, on donne une impulsion (flèche a, figure 6) sur le levier de commande 16, afin de tirer la tige 18 selon flèche b (figures 7 et 9).

Dans cette action, la butée 19 solidaire de la tige 18, s'appuie sur l'extrémité 14b du levier 14 et l'entraîne en rotation selon flèche c, figures 7 et 9, ce qui a pour effet, compte tenu de la liaison du levier 14 avec le flasque 11, par un doigt 14a engagé dans la fente 11c, de faire pivoter le flasque 11 en direction du flasque extérieur 9b de la fourchette, à l'encontre de son ressort de rappel 13.

Dans cette phase, le doigt 14a se déplace dans le fente 11c tout en restant accouplé avec le flasque 11.

A noter que le mécanisme étant en position de repos, le flasque 11 est lui-même maintenu dans cette position (écarté au maximum du flasque extérieur), au moyen d'une part, du doigt 14a en butée dans le fond de la fente 11c, et d'autre part, de l'appui du chant intérieur 14d du levier coudé 14 sur la partie en regard du support 2, comme illustré à la figure 3. Dans la position pivotée, le flasque 11 s'appuie par le chant intérieur 11d de l'un des bras 11a - 11b ou les deux, contre le flasque intérieur 9a, comme on le voit à la figure 9.

La chaîne est donc poussée positivement par le flasque mobile 11 pour être enroulée sur le grand plateau avec le maximum de précision et de guidage, du fait qu'elle est maintenue entre le flasque extérieur et le flasque mobile.

Dès que l'on relâche le levier 16 qui revient automatiquement au point mort, le ressort 13 rappelle le flasque mobile 11 en position repos ; la saillie 19 de la tige 18 est repoussée par l'extrémité 14b du levier 14 et la tige 18 reprend sa position initiale.

Inversement, lorsque l'on veut amener la chaîne A du grand plateau C sur le petit plateau D, comme illustré aux figures 8 et 10, on actionne en sens inverse le levier 16, impulsion selon flèche d, figure 6, ce qui a pour effet de repousser la tige 18 convenablement guidée dans son cheminement semi-rigide.

Dans cette action, la tige 18 coulisse dans l'entaille 14c du levier 14 et la saillie 19 solidaire de la tige 18 pousse l'extrémité 4a de la biellette 4 qui pivote selon flèche e, figure 8, en entraînant ainsi la fourchette 9. Dans cette phase, c'est donc le flasque extérieur 9b de la fourchette qui pousse positivement la chaîne A pour la faire passer sur le petit plateau C.

Parallèlement, la fourchette étant déplacée par rapport au flasque mobile qui reste en position du fait que le levier 14 n'est pas actionné, ledit flasque mobile 11 pivote par rapport au doigt 14a, comme illustré par les flèches f, figures 8 et 10, de manière à ce que le flasque mobile soit orienté pour recevoir en butée et en retenue, la chaîne poussée par le flasque extérieur. Il y a donc dans ce cas seulement, un pivotement du flasque mobile autour du doigt, mais pas un déplacement angulaire avec pour axe de rotation, l'axe 12, comme pour l'action inverse.

A noter que des variantes peuvent être introduites, sans pour cela sortir du cadre de l'invention.

Par exemple, la tige semi-rigide 18 de commande des déplacements, peut être remplacée par un câble souple classique, en prenant soin de monter un ressort de rappel agissant lorsque l'on relâche le câble pour ramener la chaîne sur le petit plateau, par pivotement d'une ou des biellettes du parallélogramme articulé avec la fourchette.

De même, le flasque mobile 11 peut être monté coulissant par rapport au flasque intérieur, avec également un rappel par ressort pour le ramener dans le plan du flasque intérieur au repos.

Les avantages de ce changement de vitesse au pédalier ressortent bien de la description, on souligne en particulier :
- la simplification de construction du changement de vitesse, du fait que l'on ne rajoute qu'un flasque mobile avec des moyens de montage, son ressort et le levier coudé de liaison;

- le guidage correct de la chaîne pendant l'action de changement de vitesse, par poussée positive à l'aide du flasque mobile et retenue par le flasque extérieur lorsqu'il s'agit de monter la chaîne sur le grand plateau, et par poussée positive à l'aide du flasque extérieur et retenue par le flasque mobile lorsqu'il s'agit de descendre la chaîne sur le petit plateau ;

- l'écartement important des flasques de la fourchette, évitant tout contact avec la chaîne, même en cas de désalignement maximum de la chaîne enroulée sur des roues libres d'au moins cinq vitesses.

0060797

Revendications de brevet.

1. Changement de vitesse au pédalier des cycles et véhicules similaires, comprenant une fourchette à deux flasques (9a - 9b) entre lesquels passe la chaîne (A), ladite fourchette étant portée par un dispositif à parallélogramme articulé (4 - 5) solidaire directement ou d'une manière rapportée, d'un support (2) fixé au cadre de la bicyclette, près du pédalier, avec un levier de commande (16) du système à parallélogramme articulé, ce changement de vitesse étant caractérisé en ce que l'écartement entre les flasques (9a - 9b) de la fourchette est très sensiblement plus grand que l'écartement usuel, et tel que, en dehors des actions de changement de vitesse, la chaîne (A) n'est pas en contact avec l'un ou l'autre flasque dans les positions les plus inclinées d'enroulement de ladite chaîne sur les pignons et plateaux extrêmes ; un troisième flasque (11) ou organe équivalent de poussée sur la chaîne (A), étant monté mobile par pivotement ou autrement, au dessous et par rapport au flasque intérieur (9a) de la fourchette (flasque le plus près du cadre), avec un système élastique de rappel (13) et des butées (14a - 11c - 11d), afin de maintenir au repos, ledit flasque mobile dans une position écartée du flasque extérieur (9b), sensiblement dans le plan du flasque intérieur (9a) ; un moyen à levier coudé, pivotant (14) ou équivalent, étant articulé sur un axe (15) du support fixe (2) ou autre partie fixe et relié d'une manière libre et articulé au flasque mobile, ledit levier coudé étant pivoté lorsque, à partir d'une position neutre déterminée, on déplace angulairement, dans un sens (a) jusqu'à une position limite, la manette ou levier (16) de commande du changement de vitesse, le flasque mobile (11) étant rapproché du flasque extérieur (9b) en poussant la chaîne (A) sur le plateau de plus grand diamètre (C), le déplacement angulaire en sens inverse (d) du levier de commande, à partir de la position neutre et jusqu'à une position limite, actionnant les moyens pivotants du système à parallélogramme articulé (4 - 5) en déplaçant ensemble les flasques (9a - 9b) de la fourchette, le flasque extérieur (9b) tirant la chaîne (A) sur le plateau de plus petit diamètre (D), pendant que, simultanément, le flasque mobile (11) est rapproché du flasque extérieur (9b) par les effets conjugués de ses liaisons au flasque intérieur et au levier coudé, ledit flasque mobile étant ramené dans tous les cas, aussitôt après les déplacements transversaux de la chaîne, dans le plan ou sensiblement du flasque intérieur (9a).

2. Changement de vitesse selon 1, caractérisé en ce que le flasque mobile (11) est monté à pivotement par rapport au flasque intérieur (9a) de la fourchette, par l'intermédiaire de bras (11a - 11b) montés oscillants sur un axe (12) tournant sur des paliers (9d) du flasque intérieur ; le ressort de rappel (13) du flasque mobile en position d'écartement maximum par rapport au flasque extérieur, étant enroulé sur l'axe (12) avec une extrémité en appui sur un des bras (11a - 11b) et l'autre extrémité en appui contre le flasque intérieur (9a).

3. Changement de vitesse selon 1 - 2, caractérisé en ce que le bras (11b) de pivotement du flasque mobile présente une fente ou ouverture (11c) sur sa face arrière, pour la liaison à pivotement et à coulissement, avec un doigt (14a) formé à l'extrémité du levier coudé (14) de commande de pivotement du flasque mobile ; le doigt (14a) faisant office d'entraîneur lorsque le levier (14) est pivoté par action dans le sens (a) sur la manette de commande (16) et de point de pivotement lorsque la fourchette est déplacée par l'action inverse dans le sens (d) sur la manette de commande (16).

4. Changement de vitesse selon 1 - 2 - 3, caractérisé en ce que la liaison entre la manette de commande (16) et le parallélogramme articulé (4 - 5) ou le levier coudé (14), s'opère par une tige semi-rigide (18) attachée à la manette et accolée au cadre afin de pouvoir suivre les courbures jusqu'au changement de vitesse où l'extrémité de la tige est guidée dans un orifice (4b) formé à l'extrémité d'un prolongement (4a) de la biellette (4), et présente, avant son passage dans ledit orifice, une butée (19) constituée par exemple, par une saillie solidaire de la tige ; ladite butée se trouvant entre l'extrémité (4a) de la biellette (4) et une entaille (14c) de guidage à coulissement formée à la partie supérieure (14b) du levier coudé (14).

5. Changement de vitesse selon 1, caractérisé en ce que le flasque mobile (11) s'étend sous le flasque intérieur (9a), sensiblement depuis l'extrémité arrière des flasques (9a - 9b) reliés par une entretoise (10), jusqu'au delà de l'extrémité avant desdits flasques, et présente un profil convexe en section pour le contact avec la chaîne.

6. Changement de vitesse selon 1 - 2 - 3, caractérisé en ce que la butée de course avant du flasque mobile (11) ou position de pivotement maximum, est constituée par le chant intérieur (11d) de l'un des bras (11a - 11b) ou des deux, s'appuyant contre le flasque intérieur (9a).

7. Changement de vitesse selon 1 - 2 - 3, caractérisé en ce que le flasque mobile (11) est maintenu en position de repos (écarté au maximum du flasque extérieur) conjointement par le doigt (14a) butant au fond de la fente (11c) et par appui du chant intérieur (14d) du levier coudé (14), contre une partie en regard du support (2).

0060797

1/3

FIG.1

FIG.2

FIG.3

FIG.4

0060797

2/3

FIG.5

FIG.6

FIG.7

FIG.8

FIG.10

FIG.9

FIG.11

**Office européen des brevets**

**RAPPORT DE RECHERCHE EUROPEENNE**

Numéro de la demande

EP 82 42 0028

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl. ³) |
| A | <u>US - A - 4 237 743</u> (SHIMANO) | | B 62 M 9/12 |
| A | <u>FR - A - 2 340 852</u> (HURET) | | |
| | ---- | | |
| | | | **DOMAINES TECHNIQUES RECHERCHES (Int. Cl. ³)**<br><br>B 62 M |

Le présent rapport de recherche a été établi pour toutes les revendications

| Lieu de la recherche | Date d'achèvement de la recherche | Examinateur |
|---|---|---|
| La Haye | 25-06-1982 | GEMMELL |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                           & : membre de la même famille, document correspondant

OEB Form 1503 03 82